**Europäisches Patentamt**

**(19)** **European Patent Office**

**Office européen des brevets**

**(11)** **EP 0 582 004 B1**

**(12)** # EUROPEAN PATENT SPECIFICATION

**(45)** Date of publication and mention
of the grant of the patent:
**29.01.1997 Bulletin 1997/05**

**(51)** Int. Cl.[6]: **B01J 23/83**, B01J 37/04,
C01B 3/40

**(21)** Application number: **92306906.6**

**(22)** Date of filing: **29.07.1992**

**(54)** **Novel composite catalysts and their use in a process for the oxidative conversion of methane or natural gas to synthesis gas**

Katalysatoren und ihre Verwendung bei der oxydativen Umwandlung von Methan oder von Erdgas zu Synthesegas

Catalyseurs et leur utilisation dans la conversion par oxydation de méthane ou de gaz naturel en gaz de synthèse

**(84)** Designated Contracting States:
**GB NL**

**(43)** Date of publication of application:
**09.02.1994 Bulletin 1994/06**

**(73)** Proprietor: **Council of Scientific and Industrial Research**
**New Delhi 110 001 (IN)**

**(72)** Inventors:
  • **Choudhary, Vasant Ramchandra**
    **Maharashtra (IN)**
  • **Rane, Vilas Hari**
    **Maharashtra (IN)**

  • **Rajput, Amarjeet Munshi Ram**
    **Maharashtra (IN)**

**(74)** Representative: **Baverstock, Michael George Douglas et al**
    **BOULT WADE TENNANT**
    **27 Furnival Street**
    **London, EC4A 1PQ (GB)**

**(56)** References cited:
    **EP-A- 0 033 505**        **US-A- 3 404 098**
    **US-A- 4 374 819**

  • **Nature, vol. 334,1990,p. 319-321**

EP 0 582 004 B1

**Description**

This invention relates to a process for the preparation of a novel composite catalyst useful for the oxidative conversion of methane or natural gas to synthesis gas or carbon monoxide and hydrogen. This invention particularly relates to a novel process for preparation of composite catalysts containing transition metal oxides and non-transition metal oxides, useful for oxidative conversion of methane or natural gas to synthesis gas (i.e. a mixture of carbon monoxide and hydrogen). The catalysts prepared by this invention are useful for the production of synthesis gas or carbon monoxide and hydrogen from methane or natural gas. The process of the present invention could be used by catalyst manufacturers and producers of carbon monoxide, hydrogen or synthesis gas as well as their users, for example producers of methanol and methanol-based products, Fischer-Tropsch synthesis products such as liquid hydrocarbons, olefine alcohols and aldehydes, ammonia and ammonia based fertilizers and chemicals, oxo-synthesis products, town gas, and reduction gas (for production of sponge iron).

The invention also relates to an improved process for the production of synthesis gas (that is, a mixture of hydrogen and carbon monoxide by the oxidative conversion of methane or natural gas) using the novel composite catalyst of the invention.

The conversion of methane or natural gas to carbon monoxide and hydrogen (or synthesis gas) by catalytic steam reforming, autothermal catalytic reforming and non-catalytic partial oxidation is known in the prior art.

The catalytic steam reforming of methane or natural gas to synthesis gas (i.e. hydrogen and carbon monoxide) is a well established technology practiced for the commercial production of hydrogen, carbon monoxide and syngas (i.e. a mixture of hydrogen and carbon monoxide). In this process, hydrocarbon feeds are converted to a mixture of $H_2$, CO and $CO_2$ by reacting hydrocarbons with steam over a catalyst (NiO supported on calcium aluminate, alumina, spinel type magnesium aluminum oxide or calcium aluminate titanate) at elevated temperature (850° - 1000°C) and elevated pressure (1013 - 4053 kPa (10 - 40 atm)) and at a steam/carbon mole ratio of 2 - 5 and a gas hourly space velocity (based on wet feed) of about 5000 - 8000 per hour. This process involves the following reactions.

$$CH_4 + H_2O \rightleftarrows CO + 3H_2$$

or

$$C_n H_m + nH_2O \rightleftarrows n\,CO + [n + (M/2)]\,H_2$$

and

$$CO + H_2O \rightleftarrows CO_2 + H_2 \text{ (shift reaction)}.$$

The conversion is highly endothermic and is carried out in a number of parallel tubes packed with catalyst and externally heated by flue gas of temperatures of 980° - 1040°C (Kirk and Othmer, Encyclopedia of Chemical Technology, 3rd Edn., 1990 vol. 12 p. 951; Ullamann's Encyclopedia of Industrial Chemistry, 5th Edn., 1989, vol. A 12 p. 186). The main drawbacks of this process are as follows. It is highly endothermic and operated at high temperature. Hence, it is highly energy intensive. Further, the shift reaction occurring in the process leads to formation of $CO_2$ and $H_2$ from CO and water, thus increasing the $H_2/CO$ ratio. Since a lower $H_2/CO$ ratio than that obtained by steam reforming is required for certain applications of synthesis gas, a secondary reformer using $CO_2$ or $O_2$ oxidants is frequently required to reduce the hydrogen content of the synthesis gas produced by steam reforming. Also, the supported nickel catalyst used in steam reforming is poisoned by sulfur-containing compounds present in very low concentrations in the feed hydrocarbons. Further, there is carbon deposition on the catalyst during the steam reforming.

Autothermal catalytic reforming of methane or natural gas with air or oxygen to $H_2$, CO and $CO_2$ is also an established technology. In this process, a feed gas mixture containing hydrocarbon, steam and oxygen (or air) is passed through a burner and then the combustion gases are passed over a catalyst (nickel supported on alumina) in a fixed bed reactor at 850° - 1000°C and 2027 - 4053 kPa (20 - 40 atm). (Ullamann's Encyclopedia of Industrial Chemistry 5th Edn., 1989, vol. A 12, p. 202). This process has the following drawbacks. There are large temperature and space velocity variations during start up and shut down which leads to abrasion and catalyst disintegration, requiring frequent refilling and removal of the catalyst. This process operates at high temperature and pressure and there is formation of carbon (or carbon deposition) in the reactor.

Non-catalytic partial oxidation of hydrocarbons to $H_2$, CO and $CO_2$ is an established technology used mostly for producing hydrogen from heavy fuel oils, primarily in locations where natural gas or lighter hydrocarbons, including naphtha, are unavailable or are uneconomical as compared with fuel oil or crude oil. This process is carried out by injecting preheated hydrocarbon, oxygen and steam through specially designed burner into a closed combustion chamber, where partial oxidation of the hydrocarbons with less than the stochiometric amount of oxygen required for complete combustion occurs at very high temperature (1350° - 1600°C) and pressures up to 15,200 kPa (150 atm) (Kirk and Othmer, Encyclopedia of Chemical Technology 3rd Edn. 1990 vol. 12 p. 952; Ullamann's Encyclopedia of Industrial Chemistry 5th Edn., 1989, vol. 12, p. 204). The main drawbacks of this process are as follows. The process is operated at a very high temperature and very high pressure and there is extensive soot or carbon formation, particularly from heavy hydrocarbons.

Recently, Ashcroft and co-workers (Nature, vol. 344, 1990, p. 319) have reported selective oxidation of methane to synthesis gas (which is a mildly exothermic reaction) using lanthanide ruthenium oxide ($Ln_2 Ru_2 O_7$ where Ln is lanthanide or another rare earth element such as Pr, Sm, Eu, Gd, Tb, Dy, Tm, Yb, Lu) catalysts at 777°C, and total gas hourly space velocity of $4 \times 10^4$ $h^{-1}$ with a $CH_4/O_2$ mole ratio of 2.0 and a $N_2/CH_4$ mole ratio of 2.0. The catalysts were prepared by conventional solid state reactions betweeen $Ln_2O_3$ and $RuO_2$ in a sealed silica tube. Although, high methane conversions to CO and $H_2$ have been obtained using these catalysts, the catalyst cost is exorbitantly high because of the use of the extremely costly Ru in the catalyst in stoichiometric quantities (i.e. Ru/Ln mole ratio = 1.0).

EP-A-33 505 describes the use of a catalyst containing nickel oxide, rare earth metal oxide and zirconium oxide in the steam reforming of liquid hydrocarbons.

US-A-4 374 819 describes catalyst compositions comprising an oxide of yttrium or a rare earth element and an oxide of cobalt, iron or nickel for use in the removal of sulfur-containing gases from waste gas streams.

In view of limitations of the prior art processes and catalysts used for the conversion of methane (or natural gas) to synthetic gas, there has been a need to develop new catalysts which are highly active, highly selective and highly productive, but have low cost, for the oxidative conversion of methane (or natural gas) to synthesis gas, which can be carried out at lower temperature and higher space velocities (i.e. lower contact times).

The present invention provides highly active/selective composite catalysts, containing transition metal oxides and non-transition metal oxides and represented by the formula $T_m.N_n.R.O_p$ wherein T is a transition element selected from Ni, Co, or a mixture thereof, m which is equal to the T/R mole ratio is from 0.01 to 100, N is a non-transition element selected from Mg, Ca, or a mixture thereof, n which is the N/R mole ratio has a positive value up to 100, R is a rare earth element selected from La, Ce, Pr, Nd, Pm, Sm, Eu, Gd, Tb, Dy, Ho, Er, Tm, Yb, or Lu or a mixture of two or more thereof, O is oxygen and p is the number of oxygen atoms needed to fulfil the valence requirements of the elements in the composite catalyst, which catalysts are useful for the oxidative conversion of methane or natural gas to synthesis gas in high yields. The catalysts are prepared by the process as described hereafter.

Another important aspect of the present invention is that, using the novel composite catalysts prepared by the process of the present invention, the oxidative conversion of methane or natural gas to synthesis gas in very high yields can be carried out at much lower temperatures and at much higher gas hourly space velocities or much lower contact times.

Another discovery is that the catalysts of the present invention can be used with or without reduction, for the oxidative conversion of methane or natural gas to synthesis gas; the reduced catalysts, however, can be operated in the said process at lower temperatures. The unreduced catalysts are first operated in the process at higher temperature and then used in the process at lower temperatures. The catalyst in its active form is essentially a reduced and/or partially reduced transition metal (viz. T) oxide dispersed in the matrix of other metal oxides.

The present invention also provides an improved process for the production of synthesis gas by oxidative conversion of methane or natural gas in presence of free-oxygen using the novel composite catalysts of the invention.

According to the present invention there is provided a process for the preparation of novel composite catalysts containing transition metal oxides and non-transition metal oxides, represented by the formula: $T_m.N_n.R.O_p$ wherein T is a transition element selected from Ni, Co, or a mixture thereof, m which is equal to the T/R mole ratio is from 0.01 to 100, N is a non-transition element selected from Mg, Ca, or a mixture thereof, n which is the N/R mole ratio has a positive value up to 100, R is a rare earth element selected from La, Ce, Pr, Nd, Pm, Sm, Eu, Gd, Tb, Ho, Er, Tm, Yb or Lu or a mixture of two or more thereof, O is oxygen, and p is the number of oxygen atoms needed to fulfil the valence requirements of the elements in the composite catalyst which catalysts are useful for the oxidative conversion of methane or natural gas to synthesis gas or $H_2$ and CO, in the presence of free oxygen, which process comprises the following steps: (i) mixing thoroughly one or more finely ground transition metal compounds represented by the formula: $T.X_\alpha$ wherein T is a transition element selected from Ni, Co, or a mixture thereof; X is selected from $NO_3$, $CH_3COO$, OH, O, $CO_3$ and Cl and a is the number of X required to fulfil the valence requirement of the transition element, one or more finely ground rare earth metal compounds, represented by the formula: $R.Y_b$ wherein, R is a rare earth element selected from La, Ce, Pr, Nd, Pm, Sm, Eu, Gd, Tb, Dy, Ho, Er, Tm, Yb or Lu or a mixture of two or more thereof, Y is selected from $NO_3$, OH, O, $CO_3$, and $CH_3COO$, and b is the number of Y required to fulfil the valence requirement of the rare earth element, and one or more finely ground non-transition metal compounds represented by the formula: $N.Y_b$, wherein N is selected from the non-transition elements Mg and Ca, which are the catalyst precursors, with T/R and N/R mole ratios of 0.01 to 100 and up to 100, respectively, with water in amount just sufficient to make a thick paste or without water, (ii) heating the mixture of catalyst precursors to dryness at a temperature of about 80° to 250°C in air, or under vacuum (iii) decomposing the dried mass containing catalyst precursors to their oxides at a temperature of about 400° to 1500°C in the presence of air or inert, for example $N_2$, He, or Ar or under vacuum for 0.1 to 50 hours, (iv) powdering the decomposed mass and making catalyst bodies which are pellets, extrudates or granules of desired size, and (v) calcining the catalyst bodies at a temperature of 400° to 1500°C in the presence of air, inert gas, for example

$N_2$, He, or Ar, $CO_2$, or a mixture thereof or under vacuum for 0.1 to 100 hours.

The present invention also provides a process for the production of synthesis gas (or a mixture of carbon monoxide and hydrogen) by oxidative conversion of methane or natural gas, which process comprises passing continuously a gaseous reactant mixture comprising methane or natural gas and oxygen or air with or without water vapour over a reduced or unreduced composite catalyst of the invention in a fixed bed reactor at a pressure in the range of 50.5 - 5050 kPa (0.5 - 50 atmospheres), a temperature in the range of 200° to 1000°C, a gas hourly space velocity in the range of $10^3 - 10^8$ $cm^3$, $g^{-1}$, $h^{-1}$, the $CH_4$ or natural gas/$O_2$ mole ratio in the feed being in the range of 1.6-10, and the $H_2O/CH_4$ or natural gas mole ratio being in the range of 0 - 3.0 and separating the water vapour, unconverted reactants and feed components other than the reactants and carbon dioxide from the product stream.

The transition element, T, in the catalyst or in the mixture of catalyst precursors is Ni, Co or a mixture thereof. The preferred rare earth element R in the catalyst or in the mixture of catalyst precursors is Yb, Eu, Sm, Nd, Pr, Dy, or La or a mixture of two or more thereof. The preferred T/R mole ratio (i.e. m) in the catalyst or in the mixture of catalyst precursors is in the range of 0.1 - 10. The preferred N/R mole ratio (i.e. n) in the catalyst or in the mixture of catalyst precursors is in the range up to 10. The preferred temperature for the decomposition of the catalyst precursors is in the range of 500° - 1000°C. The preferred period of decomposition of catalyst precursors is 0.5 - 20 hours. The preferred temperature for calcination of the catalyst is in the range of 500° - 1000°C. The preferred period of calcination of the catalyst is 0.5 - 20 hours. The preferred gas atmosphere for the decomposition of the catalyst precursors or the catalyst calcination is air or inert gas.

The catalyst product obtained from the process of the invention is a novel composite catalyst containing transition metal oxides and, optionally, non-transition metal oxides, useful for oxidative conversion of methane (or natural gas) to synthesis gas or CO and $H_2$, and which shows very high methane conversion activity, very high selectivity for CO and $H_2$ formation, and very high productivity for CO and $H_2$ and long catalyst life in the oxidative conversion of methane or natural gas to CO and $H_2$ or synthesis gas, operating at extremely high space velocities and at both lower (below 700°C, even at about 300°C) and higher (above 700°C) temperatures, can be prepared by the catalyst preparation process described in the invention.

Using the composite catalyst prepared by the process of the present invention for oxidative conversion of methane (or natural gas) in the presence of free oxygen (i.e. gaseous oxygen), methane can be converted at about 300° - 900°C to CO and $H_2$ (for synthesis gas) at a very high conversion (60 - 100%) with very high selectivity (80 - 100%) and productivity (about 5 - 15 mol.$g^{-1}$.$h^{-1}$ for CO and about 10 - 30 mol.$g^{-1}$.$h^{-1}$ for $H_2$) giving a $H_2/CO$ mole ratio in the products of about 2.0 $\pm$ 0.3 without loss of catalytic activity/selectivity for a long period. For example, a $NiO$-$Yb_2O_3$ catalyst (with a Ni/Yb mole ratio = 1.0) gave 73% conversion of methane with above 86% selectivity for CO and $H_2$ ($H_2/CO$ mole ratio = 2.0) and productivity of about 10 and 20 moles per gram catalyst per hour for CO and $H_2$, respectively, in the oxidative conversion of methane to synthesis gas at 399°C and gas hourly space velocity of 515,000 $cm^3$.$g^{-1}$.$h^{-1}$.

In using the catalyst of the invention in the oxidative conversion of methane to synthesis gas the process operating conditions are as follows.

| | |
|---|---|
| Pressure | 50.5 - 5050 kPa (0.5 - 50 atm.) |
| Reaction temperature | 200° - 1000°C (preferably 250°-900°C) |
| Gas hourly space velocity | $10^3 - 10^8$ $cm^3$.$g^{-1}$.$h^{-1}$ (preferably $1 \times 10^4$ - $5 \times 10^6$ $cm^3$.$g^{-1}$.$h^{-1}$ |
| Concentration of $CH_4$ in the feed | 10 - 90 mole % (preferably 20 - 80 mole %) |
| Concentration of $O_2$ in the feed | 1 - 40 mol % (preferably 10 - 36 mole %) |
| $CH_4$ (or natural gas)/$O_2$ mole ratio in the feed | 1.6 - 10 (preferably 1.8 - 4) |
| Concentration of $N_2$ or Ar or mixture thereof in the feed | 0 - 60 mole % |
| Concentration of water in the feed | 0 - 65 mole % |
| $H_2O/CH_4$ (or natural gas) mole ratio in the feed | 0 - 3 (preferably 0 - 2) |
| Concentration of $CO_2$ in in the feed | 0 - 10 mole % |
| Concentration of $C_2H_6$ in the feed | 0 - 10 mole % |
| Concentration of $C_3$ and $C_4$ alkanes in the feed | 0 - 5 mole % |

The catalyst may or may not be reduced before the catalytic reaction. The catalyst reduction may be carried out by passing continuously a gaseous mixture comprising hydrogen and inert gas such as $N_2$, He, or Ar) over the catalyst in a fixed bed reactor under the following conditions.

| Catalyst reduction pressure | 101 - 505 kPa (1 - 5 atm.) |
|---|---|
| Catalyst reduction temperature | 300° - 700°C |
| Concentration of $H_2$ in the reducing gas mixture | 1 - 100 mole % |
| Space velocity of the reducing gas mixture | $10^3 - 10^5$ cm$^3$.g$^{-1}$.h$^{-1}$ |
| Catalyst reduction period | 0.5 - 20 hours |

When the catalyst is not reduced by hydrogen before the catalytic reaction, the reduction of the catalyst can be effected by passing the reaction mixture comprising $CH_4$ (or natural gas) and oxygen (or air) over the catalyst at a temperature in the range of 500° - 900°C for a period in the range of 0.1 - 10 hours. Unless the catalyst is reduced this way, or by hydrogen as described above, the catalytic oxidative conversion of methane to synthesis gas over the catalyst does not occur at lower temperatures (below 500°C); the catalyst reaction on the unreduced catalyst occurs above 500°C. The unreduced catalyst is reduced during the catalytic reaction above 500°C and then the process can be operated at lower temperatures.

In the said process, the products formed are carbon monoxide (CO) and hydrogen ($H_2$) as major products and water and carbon dioxide ($CO_2$) as minor products. The gaseous product stream comprises the above-mentioned products, unconverted reactants (i.e. methane or natural gas and oxygen) and components of the feed other than reactants.

Because of addition of water in the feed, the $H_2$/CO mole ratio in the product is increased by the shift reaction:

$$CO + H_2O = H_2 + CO_2,$$

occurring simultaneously with the oxidative conversion of methane (or natural gas) to synthesis gas.

The present invention enables methane or natural gas to be converted to CO and $H_2$ (or synthesis gas) in high yields with very high productivity at both the lower (at below 700°C and even at about 300°C) and the higher (at above 700°C) temperatures by the said process as described above.

In the said process of the invention, at 300° - 900°C, the conversion of methane (0r natural gas), as high as 60 - 100% with 80 - 100% selectivity for CO and $H_2$ and productivity of CO and $H_2$ as high as 10 - 30 mol. g$^{-1}$, h$^{-1}$, and 20- 60 mol. g$^{-1}$, h$^{-1}$, respectively, can be achieved.

The present invention will now be described with reference to the following examples. Those are provided for illustrative purposes only and are not to be construed as limiting the invention as claimed.

Definition of terms used in the Examples

Total conversion of methane (%) = mole % of methane converted to all the products.

Conversion of methane to a particular product (%) or
yield for a particular product
= mole % of methane converted to the particular product.

$$\text{Selectivity for a particular product (\%)} = \left\{ \frac{\text{Conversion of methane to the product (\%)}}{\text{Total conversion of methane (\%)}} \right\} \times 100$$

Productivity (or space-time-yield) for a particular product is the amount of the product formed in the process per unit weight of catalyst per unit time.

Gas hourly space velocity (GHSV) is the volume of gaseous reactant mixture (measured at STP) passed over a unit weight of catalyst per hour.

In the conversion of natural gas the selectivity and conversion data are based on the carbon balance.

EXAMPLE 1

This example illustrates the preparation of a NiO-MgO-La$_2$O$_3$ catalyst (Ni:Mg:La = 1:1:0.1).

Finely ground MgCO$_3$ (6.25 g), La(NO$_3$)$_3$.6 H$_2$O (2.90 g), Ni(NO$_3$)$_2$.6 H$_2$O (19.46 g) and 8 ml deionized water were thoroughly mixed and the resulting mixture was dried in air at 120°C for 6 hours. The dried mass was decomposed in air at 600°C for 6 hours, the decomposed mass was then powdered, pressed binder-free at 5 tons pressure and crushed to 22 - 30 mesh size particles. The catalyst particles were then calcined in air at 900°C for 6 hours to provide the desired NiO-MgO-La$_2$O$_3$ catalyst. The surface area of the catalyst was 4.63 m$^2$.g$^{-1}$.

EXAMPLE 2

This example illustrates the preparation of a NiO-CaO-Sm$_2$O$_3$ catalyst (Ni:Ca:Sm = 1:1:0.1).

Finely ground Ca(OH)$_2$ (4.96 g), (CH$_3$CO$_2$)$_3$ Sm.3H$_2$O (2.55 g), Ni(NO$_3$)$_2$.6 H$_2$O (19.46 g) and 5 ml of deionized water were thoroughly mixed and the resulting mixture was dried in air at 130°C for 4 hours. The dried mass was decomposed in air at 610°C for 6 hours. The decomposed mass was then powdered, pressed binder-free at 4 ton pressure and crushed to 22 - 30 mesh size particles. The catalyst particles were then calcined in air at 930°C for 5 hours to provide the desired NiO-CaO-Sm$_2$O$_3$ catalyst. The surface area of the catalyst was 6.05 m$^2$.g$^{-1}$.

EXAMPLE 3

This example illustrates the preparation of a NiO-MgO-Sm$_2$O$_3$ catalyst (Ni:Mg:Sm = 1:1:0.1).

Finely ground MgCO$_3$ (6.25 g), (CH$_3$COO)$_3$ Sm .3 H$_2$O (2.55 g), Ni(NO$_3$)$_2$. 6 H$_2$O (19.46 g) and 7 ml of deionized water were thoroughly mixed and the resulting mixture was dried in air at 120°C for 12 hours. The dried mass was decomposed at 630°C for 4 hours. The decomposed mass was then powdered, pressed binder-free at 4 tons pressure and crushed to 22 - 30 mesh size particles. The catalyst particles were then calcined in air at 900°C for 6 hours to provide the desired NiO-MgO-Sm$_2$O$_3$ catalyst. The surface area of the catalyst was 13.4 m$^2$.g$^{-1}$.

EXAMPLE 4

This example illustrates the use of the catalysts, the preparation of which is described in Examples 1 to 3, for the oxidative conversion of methane to synthesis gas. The reaction over the catalysts was carried out in the reactor and by the procedure as follows:

The oxidative conversion of methane to synthesis gas (i.e. CO and H$_2$) over the catalyst was carried out in a flow quartz reactor (i.d. = 5 mm) packed with the catalyst particles (20 mg) using a mixture of pure methane and oxygen as a feed. The reactor temperature was measured by a Chromel-Alumel thermocouple located in the catalyst bed. The reactor effluent gases were cooled at about 0°C to condense the water formed in the reaction using a coiled condenser immersed in ice-water slurry and then analysed for CO, CO$_2$, H$_2$ and unconverted methane and O$_2$ by an on-line gas chromatograph using a Spherocarb column. The change in the volumetric flow rate of gases due to the reaction

$$(CH_4 + \tfrac{1}{2} O_2 \rightarrow CO + 2H_2)$$

was determined by measuring the flow rate of feed and product gases (after removing water), using a soap bubble flow-meter. Before carrying out the reaction, the catalyst was pretreated in situ at the calcination temperature of the catalyst in a flow of pure N$_2$ (50.0 ml.min$^{-1}$) for 1 hour and then reduced in the flow (60 cm$^3$.min$^{-1}$) of a mixture of H$_2$ and N$_2$ (20% H$_2$) at 500°C for 1 hour.

The reaction conditions were as follows:

| Feed composition | 67 mol % CH$_4$ and 37 mol % O$_2$ |
|---|---|
| Gas hourly space velocity (GHSV) | 516,000 cm$^3$.g$^{-1}$.h$^{-1}$ |
| Pressure | 131.7 ± 10.1 kPa (1.3 ± 0.1 atm.) |

The results obtained using the catalysts at different reaction temperatures are presented in Table 1.

Table 1

| Performance of the catalysts, preparation of which is described in EXAMPLES 1-3, in oxidative conversion of methane to synthesis gas (i.e. CO and $H_2$). | | | | | | |
|---|---|---|---|---|---|---|
| Catalyst | Examples in which catalyst preparation is described | Reaction temperature (°C) | $CH_4$-Conversion (%) | Selectivity for CO (%) | Selectivity for $H_2$ (%) | $H_2$/CO mole ratio |
| NiO-MgO-$La_2O_3$ (Ni:Mg:La= 1 :1 :0.1) | Example 1 | 703 | 73.0 | 94.5 | 93.9 | 1.99 |
| | | 600 | 65.3 | 88.5 | 90.2 | 2.04 |
| | | 496 | 58.6 | 82.9 | 85.9 | 2.07 |
| NiO-CaO-$Sm_2O_3$ (Ni:Ca:Sm= 1 :1 :0.1) | Example 2 | 500 | 74.2 | 86.0 | 89.3 | 2.08 |
| NiO-MgO-$Sm_2O_3$ (Ni:Mg:Sm = 1 :1 :0.1) | Example 3 | 702 | 81.7 | 95.0 | 96.6 | 2.03 |
| | | 602 | 76.8 | 92.0 | 93.1 | 2.02 |
| | | 507 | 69.1 | 86.7 | 89.7 | 2.07 |
| | | 326 | 61.9 | 79.2 | 87.0 | 2.20 |

## EXAMPLE 5

This example illustrates the preparation of a NiO-MgO-$Sm_2O_3$ catalyst (Ni:Mg:Sm = 1:1:0.1).

Finely ground $Ni(NO_3)_2$.6 $H_2O$ (19.46 g), finely ground magnesium carbonate, (6.25 g), finely ground $(CH_3CO_2)_3$ Sm. 3 $H_2O$ (2.55 g) and 7 ml of deionized water were thoroughly mixed and the resulting mixture was dried in air at 120°C for 4 hours. The dried mass was decomposed in air at 630°C for 4 hours. The decomposed mass was then powdered, pressed binder-free at 5 tons pressure and crushed to 22 - 30 mesh size particles. The catalyst particles were then calcined in air at 930°C for 5 hours to provide the desired NiO-MgO-$Sm_2O_3$ catalyst. The surface area of the catalyst was 13.4 $m^2.g^{-1}$.

## EXAMPLE 6

This example illustrates the process for the oxidative conversion of methane to synthesis gas (CO and $H_2$) using the NiO-MgO-$Sm_2O_3$ (Ni:Mg:Sm = 1:1:0.1) catalyst, the preparation of which is given in Example 5, at different reaction temperatures.

The catalytic process was carried out in the reactor and by the procedure similar to that described in Example 4 , at the following conditions.

| | |
|---|---|
| Feed composition | 67 mol % $CH_4$ and 33 mol % $O_2$ |
| Pressure | 111.5 kPa (1.1 atm.) |
| Gas hourly space velocity (GHSV) | 518,000 $cm^3.g^{-1}.h^{-1}$ |

The results obtained at the different reaction temperatures were as follows.

|  | Reaction temperature (°C) | | | |
|---|---|---|---|---|
|  | 602 | 507 | 701 | 326 |
| Total CH$_4$ conversion (%) | 76.8 | 69.1 | 81.7 | 61.9 |
| Selectivity for CO (%) | 92.0 | 86.7 | 95.0 | 79.2 |
| Selectivity for H$_2$ (%) | 93.1 | 89.7 | 96.2 | 87.0 |
| H$_2$/CO mole ratio | 2.02 | 2.07 | 2.03 | 2.20 |

The main advantages of the present invention are as follows:

(i) The novel catalysts prepared by the process of the present invention have very high methane (or natural gas) conversion activity with very high selectivity and productivity for synthesis gas or CO and H$_2$ in the oxidative conversion of methane (or natural gas) to synthesis gas, which is a mildly exothermic reaction, and hence is not energy intensive. After start of the catalytic reaction, there is no need to provide energy for the reaction as heat is generated during the reaction.

(ii) The chemicals used in the catalyst preparation are less expensive than those such as ruthenium used in the prior art.

(iii) By using the catalyst of present invention, the oxidative conversion of methane (or natural gas) to synthesis gas can be carried out at much lower temperatures than those used in the different processes known in the prior art, and also at higher space velocities.

(iv) The catalysts of the present invention show high activity/selectivity at extremely high space velocities (i.e. at very low contact times) and hence have very high productivity for both CO and H$_2$ in the oxidative conversion of methane (or natural gas) to synthesis gas.

(v) The catalysts of present invention can be used in the oxidative conversion of methane (or natural gas) to synthesis gas without the loss of catalytic activity/selectivity for long periods of time, whilst showing no catalyst deactivation.

(vi) There is no carbon deposition on the catalyst in the oxidative conversion of methane (or natural gas) to synthesis gas.

(vii) In the process for making synthesis gas using the catalysts of the present invention the H$_2$/CO mole ratio is about 2.0, and if required, it can be increased above 2.0 by adding water vapour to the feed.

## Claims

1. A process for the preparation of novel composite catalysts, containing transition metal oxides and non-transition metal oxides, represented by the formula: $T_m.N_n.R.O_p$ wherein T is a transition element selected from Ni, Co, or a mixture thereof, m, which is equal to the T/R mole ratio, is from O.OI to 100, N is a non-transition element selected from Mg, Ca, or a mixture thereof, n, which is the N/R mole ratio, has a positive value up to 100, R is a rare earth element selected from La, Ce, Pr, Nd, Pm, Sm, Eu, Gd, Tb, Dy, Ho, Er, Tm, Yb or Lu or a mixture of two or more thereof, O is oxygen and p is the number of oxygen atoms needed to fulfil the valence requirement of the elements in the composite catalyst, which catalysts are useful for the oxidative conversion of methane or natural gas to synthesis gas or H$_2$ and CO in the presence of free oxygen, which process comprises the following steps: (i) mixing thoroughly one or more finely ground transition metal compounds represented by the formula: $T.X_\alpha$ wherein T is a transitional element selected from Ni, Co, or a mixture thereof; X is selected from NO$_3$, CH$_3$COO, OH, O, CO$_3$ and Cl, and $\alpha$ is the number of X required to fulfil the valence requirement of the transition element, and one or more finely ground rare earth metal compounds represented by the formula: $R.Y_b$ wherein R is a rare earth element selected from La, Ce, Pr, Nd, Pm, Sm, Eu, Gd, Eb, Dy, Ho, Er, Tm, Yb, or Lu or a mixture of two or more thereof, Y is selected from NO$_3$, OH, O, CO$_3$, and CH$_3$COO, and b is the number of Y required to fulfil the valence requirement of the rare earth element and one or more finely ground non-transition metal compounds represented by a formula: $N.Y_b$, wherein N is selected from the non-transition elements Mg and Ca, which are the catalyst precursors, with T/R and N/R mole ratios of 0.01 to 100 and up to 100, respectively, with water in amount just sufficient to make a thick paste or without water, (ii) heating the mixture of catalyst precursors to dryness at a temperature of about 80° to 250°C in air or under vacuum, (iii) decomposing the dried mass containing catalyst precursors to their oxides at a temperature of about 400° to 1500°C in the presence of air or inert gas, for example N$_2$, He, or Ar or under vacuum for about 0.1 to 50 hours, (iv) powdering the decomposed mass and making catalyst bodies which are pellets, extrudates or granules of desired size, and (v) calcining the catalyst bodies at a temperature of 400°C to 1500°C in the presence of air, inert gas, for example $N_2$, He, or Ar, $CO_2$ or a mixture thereof or under vacuum for 0.1 to 100 hours.

2. A process as claimed in claim 1 wherein the T/R mole ratio (m) in the catalyst or in the mixture of catalyst precursors ranges from 0.1 to 10.

3. A process as claimed in claim 1 or claim 2 wherein the N/R mole ratio (n) in the catalyst or in the mixture of catalyst precursors ranges up to 10.

4. A process as claimed in any one of claims 1 to 3 wherein the decomposition temperature ranges from 500 to 1000°C.

5. A process as claimed in any one of claims 1 to 4 wherein the period of decomposition ranges from 0.5 to 20 hours.

6. A process as claimed in any one of claims 1 to 5 wherein the catalyst calcination temperature ranges from 500° to 1000°C.

7. A process as claimed in any one of claims 1 to 6 wherein the period of catalyst calcination ranges from 0.5 to 20 hours.

8. A novel composite catalyst represented by the formula $T_m \cdot N_n \cdot R \cdot O_p$ wherein T, m, N, n, R, O and p are as defined in claim 1 when prepared by a method as claimed in any one of claims 1 to 7.

9. An improved process for the production of synthesis gas which is a mixture of carbon monoxide and hydrogen by oxidative conversion of methane or natural gas, which process comprises passing continuously a gaseous reactant mixture comprising methane or natural gas and oxygen or air with or without water vapour over a reduced or unreduced composite catalyst prepared by the process of any one of claims 1 to 7 in a fixed bed reactor at a pressure in the range of 50.5-5050 kPa (0.5-50 atmospheres), a temperature in the range of 200° to 1000°C, a gas hourly space velocity in the range of $10^3$-$10^8$ $cm^3$, $g^{-1}$, $h^{-1}$, the $CH_4$ or natural gas/$O_2$ mole ratio in the feed being in the range of 1.6-10, and the $H_2O/CH_4$ or natural gas mole ratio being in the range of 0-3.0 and separating the water vapour, unconverted reactants and feed components other than the reactants and carbon dioxide from the product stream.

10. A process as claimed in claim 9 wherein the pressure employed ranges from 101 to 505 kPa (1 to 5 atmospheres).

11. A process as claimed in claim 9 or claim 10 wherein the reaction temperature ranges from 250° to 900°C.

12. A process as claimed in any one of claims 9 to 11 wherein the gas hourly space velocity ranges from $1 \times 10^4$ to $5 \times 10^6$ $cm^3 \cdot g^{-1} \cdot h^{-1}$.

13. A process as claimed in any one of claims 9 to 12 wherein the $CH_4$ or natural gas/$O_2$ mole ratio ranges from 1.8 to 4.0.

14. A process as claimed in any one of claims 9 to 13 wherein the concentration of methane in the feed ranges from 20 to 80 mole %.

15. A process as claimed in any one of claims 9 to 14 wherein the concentration of oxygen in the feed ranges from 10 to 36 mole %.

16. A process as claimed in any one of claims 9 to 15 wherein the concentration of water in the feed ranges from O to 65 mole %.

17. A process as claimed in any one of claims 9 to 16 wherein the concentration of $N_2$, Ar or a mixture thereof in the feed ranges from O to 60 mole %.

18. A process as claimed in any one of claims 9 to 17 wherein the concentration of ethane in the feed ranges from O to 10 mole %.

19. A process as claimed in any one of claims 9 to 18 wherein the concentration of $C_3$ and $C_4$ alkanes in the feed ranges from O to 5 mole %.

20. A process as claimed in any one of claims 9 to 19 wherein the concentration of $CO_2$ in the feed ranges from O to 10 mole %.

21. A process as claimed in any one of claims 9 to 20 wherein the $H_2O/CH_4$ or natural gas mole ratio in the feed ranges from O to 2.

22. A process as claimed in any one of claims 9 to 21 wherein in the catalyst the rare earth element R, is chosen from Yb, Eu, Nd, Sm, Pr, Dy and La or mixture thereof, and the T/R and N/R mole ratios are respectively from 0.1 to 10 and 0.01 to 10.

23. A process as claimed in any one of claims 9 to 22 wherein the catalyst is reduced before the catalytic reaction by contacting it continuously with a gaseous mixture comprising hydrogen and an inert gas such as $N_2$ or Ar with $H_2$ in a concentration in the range of 1 to 100 mole % at a pressure in the range of 101 to 505 KPa (1.0 to 5.0 atmospheres), at a temperature in the range of 300° to 700°C, at a gas hourly space velocity in the range of $10^3$ to $10^5$ $cm^3.g^{-1}.h^{-1}$ for a period in the range of 0.1 to 20 hours.

24. A process as claimed in any one of claims 9 to 22 wherein the catalyst reduction is effected by passing the reaction mixture continuously over the catalyst at a temperature in the range of 500° to 900°C for a period in the range of 0.1 to 10 hours.

**Patentansprüche**

1. Verfahren zur Herstellung von neuen Composite-Katalysatoren, die Übergangsmetall-Oxide und Nicht-Übergangsmetall-Oxide enthalten und durch die Formel $T_mN_nRO_p$ dargestellt werden, wobei T ein aus Ni, Co oder einer Mischung davon ausgewähltes Übergangselement ist, m, das dem T/R-Molenverhältnis entspricht, 0,01 bis 100 beträgt, N ein aus Mg, Ca oder einer Mischung davon ausgewähltes Nicht-Übergangselement ist, n, welches das N/R-Molenverhältnis ist, einen positiven Wert bis zu 100 aufweist, R ein aus La, Ce, Pr, Nd, Pm, Sm, Eu, Gd, Tb, Dy, Ho, Er, Tm, Yb oder Lu oder einer Mischung von zwei oder mehreren davon ausgewähltes Seltenerdelement ist, O Sauerstoff ist und p die Zahl der Sauerstoffatome ist, die zur Erfüllung des Valenzerfordernisses der Elemente im Composite-Katalysator nötig sind, wobei die Katalysatoren nützlich sind für die oxidative Umwandlung von Methan oder Erdgas in Synthesegas oder $H_2$ und CO in Anwesenheit freien Sauerstoffs, wobei das Verfahren die folgenden Schritte aufweist:

(i) inniges Mischen einer oder mehrerer feingemahlener Übergangsmetall-Verbindungen, die durch die Formel $TX_a$ dargestellt werden, wobei T ein aus Ni, Co oder einer Mischung davon ausgewähltes Übergangselement ist; X aus $NO_3$, $CH_3COO$, OH, O, $CO_3$ und Cl ausgewählt ist, und a die Anzahl von X ist, die zur Erfüllung des Valenzerfordernisses des Übergangselements benötigt wird, und einer oder mehrerer feingemahlener Seltenerdmetall-Verbindungen, die durch die Formel $RY_b$ dargestellt werden, wobei R ein aus La, Ce, Pr, Nd, Pm, Sm, Eu, Gd, Eb, Dy, Ho, Er, Tm, Yb oder Lu oder einer Mischung von zwei oder mehreren davon ausgewähltes Seltenerdelement ist, Y aus $NO_3$, OH, O, $CO_3$ und $CH_3COO$ ausgewählt ist, und b die Anzahl von Y ist, die zur Erfüllung des Valenzerfordernisses des Seltenerdelements benötigt wird, und einer oder mehrerer feingemahlener Nicht-ÜbergangsmetallVerbindungen, die durch die Formel $NY_b$ dargestellt werden, wobei N aus den Nicht-Übergangselementen Mg und Ca ausgewählt ist, wobei diese Verbindung die Katalysator-Vorläufer sind und das T/R- bzw. N/R-Molenverhältnis 0,01 bis 100 bzw. bis zu 100 beträgt, mit einer zur Herstellung einer dickflüssigen Paste ausreichenden Wassermenge oder ohne Wasser,
(ii) Erwärmen der Katalysatorenvorläufer-Mischung bis zur Trockne bei einer Temperatur von ungefähr 80° bis 250°C an Luft oder unter Vakuum,
(iii) Zersetzen der getrockneten, die Katalysatoren-Vorläufer enthaltenden Masse in ihre Oxide bei einer Temperatur von ungefähr 400° bis 1500°C in Anwesenheit von Luft oder Inertgas, beispielsweise $N_2$, He oder Ar, oder unter Vakuum während ungefähr 0,1 bis 50 Stunden,
(iv) Pulverisieren der zersetzten Masse und Herstellen von Katalysator-Körpern, die Pellets, Extrudate oder Körner gewünschter Größe sind, und
(v) Kalzinieren der Katalysator-Körper bei einer Temperatur von 400° bis 1500°C in Anwesenheit von Luft, Inertgas, beispielsweise $N_2$, He oder Ar, $CO_2$ oder einer Mischung davon oder unter Vakuum für 0,1 bis 100 Stunden.

**2.** Verfahren nach Anspruch 1, wobei das T/R-Molenverhältnis (m) im Katalysator oder in der Katalysatorvorläufer-Mischung 0,1 bis 10 beträgt.

**3.** Verfahren nach Anspruch 1 oder 2, wobei das N/R-Molenverhältnis (n) im Katalysator oder in der Katalysatorvorläufer-Mischung bis zu 10 beträgt.

**4.** Verfahren nach einem der Ansprüche 1 bis 3, wobei die Zersetzungstemperatur 500° bis 1000°C beträgt.

**5.** Verfahren nach einem der Ansprüche 1 bis 4, wobei die Zeitdauer der Zersetzung 0,5 bis 20 Stunden beträgt.

**6.** Verfahren nach einem der Ansprüche 1 bis 5, wobei die Katalysator-Kalzinierungstemperatur 500° bis 1000°C beträgt.

**7.** Verfahren nach einem der Ansprüche 1 bis 6, wobei die Katalysator-Kalzinierungsdauer 0,5 bis 20 Stunden beträgt.

**8.** Composite-Katalysator, dargestellt durch die Formel $T_mN_nRO_p$, wobei T, m, N, n, R, O und p gemäß Anspruch 1 definiert sind, hergestellt nach einem Verfahren gemäß einem der Ansprüche 1 bis 7.

**9.** Verbessertes Verfahren zur Herstellung von Synthesegas, das eine Mischung aus Kohlenmonoxid und Wasserstoff ist, durch oxidative Umwandlung von Methan oder Erdgas, wobei das Verfahren aufweist:
kontinuierliches Vorbeiführen einer Methan oder Erdgas und Sauerstoff oder Luft enthaltenden Mischung mit oder ohne Wasserdampf an einem reduzierten oder nicht-reduzierten nach dem Verfahren gemäß einem der Ansprüche 1 bis 7 hergestellten Composite-Katalysator in einem Festbettreaktor bei einem Druck im Bereich von 50,5 bis 5050 kPa (0,5 bis 50 atm), einer Temperatur im Bereich von 200° bis 1000°C, einer Gas-Raumgeschwindigkeit im Bereich von $10^3$ bis $10^8$ $cm^3$/(g h), wobei
das $CH_4$- oder Erdgas/$O_2$-Molenverhältnis in der Aufgabe im Bereich von 1,6 bis 10 und das $H_2O/CH_4$- oder Erdgas-Molenverhältnis im Bereich von 0 bis 3,0 liegt, und
Abtrennen des Wasserdampfs, der nicht umgewandelten Reaktanten und Aufgabe-Komponenten - außer den Reaktanten und Kohlendioxid - vom Produktstrom.

**10.** Verfahren nach Anspruch 9, wobei der angewendete Druck 101 bis 505 kPa (1 bis 5 atm) beträgt.

**11.** Verfahren nach Anspruch 9 oder 10, wobei die Reaktionstemperatur 250° bis 900°C betragt.

**12.** Verfahren nach einem der Ansprüche 9 bis 11, wobei die Gas-Raumgeschwindigkeit $1 \times 10^4$ bis $5 \times 10^6$ $cm^3$/(g h) beträgt.

**13.** Verfahren nach einem der Ansprüche 9 bis 12, wobei das $CH_4$- oder Erdgas/$O_2$-Molenverhältnis 1,8 bis 4,0 beträgt.

**14.** Verfahren nach einem der Ansprüche 9 bis 13, wobei die Methan-Konzentration in der Aufgabe 20 bis 80 Molenprozent beträgt.

**15.** Verfahren nach einem der Ansprüche 9 bis 14, wobei die Sauerstoff-Konzentration in der Aufgabe 10 bis 36 Molenprozent beträgt.

**16.** Verfahren nach einem der Ansprüche 9 bis 15, wobei die Wasser-Konzentration in der Aufgabe 0 bis 65 Molenprozent beträgt.

**17.** Verfahren nach einem der Ansprüche 9 bis 16, wobei die Konzentration von $N_2$, Ar oder einer Mischung davon in der Aufgabe 0 bis 60 Molenprozent beträgt.

**18.** Verfahren nach einem der Ansprüche 9 bis 17, wobei die Ethan-Konzentration in der Aufgabe 0 bis 10 Molenprozent beträgt.

**19.** Verfahren nach einem der Ansprüche 9 bis 18, wobei die Konzentration von $C_3$- und $C_4$-Alkanen in der Aufgabe 0 bis 5 Molenprozent beträgt.

**20.** Verfahren nach einem der Ansprüche 9 bis 19, wobei die $CO_2$-Konzentration in der Aufgabe 0 bis 10 Molenprozent beträgt.

**21.** Verfahren nach einem der Ansprüche 9 bis 20, wobei das $H_2O/CH_4$- oder Erdgas-Molenverhältnis in der Aufgabe 0 bis 2 beträgt.

**22.** Verfahren nach einem der Ansprüche 9 bis 21, wobei das Seltenerdelement R im Katalysator aus Yb, Eu, Nd, Sm, Pr, Dy und La oder einer Mischung davon ausgewählt ist, und die T/R- und N/R-Molenverhältnisse 0,1 bis 10 bzw. 0,01 bis 10 betragen.

**23.** Verfahren nach einem der Ansprüche 9 bis 22, wobei der Katalysator vor der katalytischen Reaktion reduziert wird durch kontinuierliches Kontaktieren mit einer Wasserstoff und ein Inertgas wie beispielsweise $N_2$ oder Ar enthaltenden gasförmigen Mischung,
mit $H_2$ in einer Konzentration von 1 bis 100 Molenprozent, bei einem Druck von 101 bis 505 kPa (1,0 bis 5,0 atm), einer Temperatur von 300° bis 700°C und einer Gas-Raumgeschwindigkeit von $10^3$ bis $10^5$ cm$^3$/(g h), während 0,1 bis 20 Stunden.

**24.** Verfahren nach einem der Ansprüche 9 bis 22, wobei die Katalysator-Reduktion ausgeführt wird durch kontinuierliches Vorbeiführen der Reaktionsmischung am Katalysator bei einer Temperatur von 500° bis 900°C während 0,1 bis 10 Stunden.

## Revendications

**1.** Procédé pour la préparation de nouveaux catalyseurs composites, contenant des oxydes de métaux de transition et des oxydes de métaux qui ne sont pas de transition, représentés par la formule : $T_m.N_n.R.O_p$ dans laquelle T représente un élément de transition choisi parmi Ni, Co ou un de leurs mélanges ; m, qui est égal au rapport molaire T/R, vaut de 0,01 à 100 ; N est un métal qui n'est pas un élément de transition,choisi parmi Mg, Ca ou un de leurs mélanges ; n, qui est le rapport molaire N/R, a une valeur positive allant jusqu'à 100 ; R est un élément des terres rares, choisi parmi La, Ce, Pr, Nd, Pm, Sm, Eu, Gd, Tb, Dy, Ho, Er, Tm, Yb ou Lu ou un mélange de deux ou plusieurs de ces éléments ; O représente l'oxygène et p est le nombre d'atomes d'oxygène nécessaires pour répondre aux exigences de valence des éléments présents dans le catalyseur composite, ces catalyseurs étant utiles pour la conversion oxydante de méthane ou de gaz naturel en du gaz de synthèse ou en $H_2$ et CO en présence d'oxygène libre, ce procédé comprenant les étapes suivantes : (i) mélangeage forcé d'un ou plusieurs composés de métaux de transition, finement broyés, représentés par la formule : $T.X_\alpha$, dans laquelle T représente un élément de transition choisi parmi Ni, Co ou un de leurs mélanges ; X est choisi parmi $NO_3$, $CH_3COO$, OH, O, $CO_3$ et Cl, et $\alpha$ est le nombre de X nécessaires pour répondre aux exigences de valence de l'élément de transition, et un ou plusieurs composés de métaux des terres rares finement broyés, représentés par la formule $R.Y_b$, dans laquelle R représente un élément des terres rares choisi parmi La, Ce, Pr, Nd, Pm, Sm, Eu, Gd, Eb, Dy, Ho, Er, Tm, Yb ou Lu ou un mélange de deux ou de plusieurs de ces éléments des terres rares ; Y est choisi parmi $NO_3$, OH, O, $CO_3$ et $CH_3COO$, et b est le nombre de Y nécessaires pour répondre aux exigences de valence de l'élément des terres rares, et un ou plusieurs composés, finement broyés, de métaux qui ne sont pas des métaux de transition et sont représentés par une formule : $N.Y_b$, dans laquelle N est choisi parmi les éléments qui ne sont pas de transition,Mg et Ca, qui sont les précurseurs du catalyseur, avec les rapports molaires T/R et N/R de 0,01 à 100 et jusqu'à 100, respectivement, avec de l'eau en une quantité juste suffisante pour obtenir une pâte épaisse, ou sans eau ; (ii) chauffage jusqu'à siccité du mélange de précurseurs du catalyseur à une température d'environ 80° à 250 °C à l'air ou sous vide ; (iii) décomposition de la masse séchée contenant des précurseurs du catalyseur pour parvenir à leurs oxydes,à une température d'environ 400° à 1 500 °C en présence d'air ou d'un gaz inerte, par exemple $N_2$, He ou Ar ou sous vide, pendant une période d'environ 0,1 à 50 h ; (iv) pulvérisation de la masse décomposée et production des corps de catalyseur qui sont des pastilles, des extrudats ou des granules de taille voulue, et (v) calcination des corps de catalyseur à une température de 400 °C à 1 500 °C en présence d'air, d'un gaz inerte, par exemple $N_2$, He ou Ar, $CO_2$ ou un de leurs mélanges, ou sous vide, durant 0,1 à 100 h.

**2.** Procédé tel que revendiqué à la revendication 1, dans lequel le rapport molaire T/R (m) dans le catalyseur ou dans le mélange de précurseurs du catalyseur se situe entre 0,1 et 10.

**3.** Procédé tel que revendiqué à la revendication 1 ou à la revendication 2, dans lequel le rapport molaire N/R, (n) dans le catalyseur ou dans le mélange de précurseurs du catalyseur, va jusqu'à 10.

**4.** Procédé tel que revendiqué dans l'une quelconque des revendications 1 à 3, dans lequel la température de décomposition se situe entre 500 et 1 000 °C.

**5.** Procédé tel que revendiqué dans l'une quelconque des revendications 1 à 4, dans lequel la période de décomposition se situe entre 0,5 et 20 h.

**6.** Procédé tel que revendiqué dans l'une quelconque des revendications 1 à 5, dans lequel la température de calcination du catalyseur se situe entre 500 et 1000°C.

**7.** Procédé tel que revendiqué dans l'une quelconque des revendications 1 à 6, dans lequel la période de calcination du catalyseur se situe entre 0,5 et 20 h.

**8.** Nouveau catalyseur composite représenté par la formule $T_m.N_n.R.O_p$ dans laquelle T, m, N, n, R, O et p sont tels que définis à la revendication 1, quand ce catalyseur est préparé par un procédé tel que revendiqué dans l'une quelconque des revendications 1 à 7.

**9.** Procédé perfectionné pour la production de gaz de synthèse, qui est un mélange de monoxyde de carbone et d'hydrogène, par conversion oxydante du méthane ou du gaz naturel, ce procédé comprenant le passage en continu d'un mélange gazeux de corps réactionnels, comprenant du méthane ou du gaz naturel et de l'oxygène ou de l'air, avec ou sans vapeur d'eau, sur un catalyseur composite, réduit ou non réduit, préparé par le procédé selon l'une quelconque des revendications 1 à 7, dans un réacteur à lit fixe à une pression comprise entre 50,5 et 5 050 kPa (0,5 à 50 atmosphères), à une température comprise entre 200° et 1 000 °C, à une vitesse spatiale horaire de gaz comprise entre $10^3$ et $10^8$ $cm^3g^{-1}h^{-1}$,le rapport molaire entre $CH_4$ ou le gaz naturel et $O_2$ étant dans l'alimentation compris entre 1,6 et 10, et le rapport molaire $H_2O/CH_4$ ou gaz naturel étant compris entre 0 et 3,0, et séparation de la vapeur d'eau, des corps réactifs non convertis et des constituants de l'alimentation, autres que les corps réactifs et le dioxyde de carbone, d'avec le courant des produits.

**10.** Procédé tel que revendiqué à la revendication 9, dans lequel la pression utilisée se situe entre 101 et 505 kPa (1 à 5 atmosphères).

**11.** Procédé tel que revendiqué à la revendication 9 ou la revendication 10, dans lequel la température de réaction se situe entre 250° et 900 °C.

**12.** Procédé tel que revendiqué dans l'une quelconque des revendications 9 à 11, dans lequel la vitesse spatiale horaire de gaz se situe entre $1 \times 10^4$ et $5 \times 10^6 cm^3g^{-1}h^{-1}$.

**13.** Procédé tel que revendiqué dans l'une quelconque des revendications 9 à 12, dans lequel le rapport molaire $CH_4$ ou gaz naturel/$O_2$ se situe entre 1,8 et 4,0.

**14.** Procédé tel que revendiqué dans l'une quelconque des revendications 9 à 13, dans lequel la concentration du méthane présent dans l'alimentation se situe entre 20 et 80 moles %.

**15.** Procédé tel que revendiqué dans l'une quelconque des revendications 9 à 14, dans lequel la concentration de l'oxygène dans l'alimentation se situe entre 10 et 36 moles %.

**16.** Procédé tel que revendiqué dans l'une quelconque des revendications 9 à 15, dans lequel la concentration de l'eau dans l'alimentation se situe entre 0 et 65 moles %.

**17.** Procédé tel que revendiqué dans l'une quelconque des revendications 9 à 16, dans lequel la concentration de $N_2$, de Ar ou d'un de leurs mélanges se situe dans l'alimentation entre 0 et 60 moles %.

**18.** Procédé tel que revendiqué dans l'une quelconque des revendications 9 à 17, dans lequel la concentration de l'éthane dans l'alimentation se situe entre 0 et 10 moles %.

**19.** Procédé tel que revendiqué dans l'une quelconque des revendications 9 à 18, dans lequel la concentration d'alcanes en $C_3$ et $C_4$ dans l'alimentation se situe entre 0 et 5 moles %.

**20.** Procédé tel que revendiqué dans l'une quelconque des revendications 9 à 19, dans lequel la concentration de $CO_2$ dans l'alimentation se situe entre 0 et 10 moles %.

**21.** Procédé tel que revendiqué dans l'une quelconque des revendications 9 à 20, dans lequel le rapport molaire $H_2O/CH_4$ ou gaz naturel se situe dans l'alimentation entre 0 et 2.

**22.** Procédé tel que revendiqué dans l'une quelconque des revendications 9 à 21, dans lequel, dans le catalyseur, l'élément des terres rares, R, est choisi parmi Yb, Eu, Nd, Sm, Pr, Dy et La ou un de leurs mélanges, et les rapports molaires T/R et N/R valent respectivement de 0,1 à 10 et de 0,01 à 10.

**23.** Procédé tel que revendiqué dans l'une quelconque des revendications 9 à 22, dans lequel le catalyseur est réduit avant la réaction catalytique, par sa mise en contact en continu avec un mélange gazeux comprenant de l'hydrogène et un gaz inerte tel que $N_2$ ou Ar, avec $H_2$ présent en une concentration comprise entre 1 et 100 moles % à une pression comprise entre 101 et 505 kPa (1,0 à 5,0 atmosphères), à une température comprise entre 300 et 700 °C, à une vitesse spatiale horaire de gaz comprise entre $10^3$ et $10^5 cm^3 g^{-1} h^{-1}$ pendant une période de temps comprise entre 0,1 et 20 h.

**24.** Procédé tel que revendiqué dans l'une quelconque des revendications 9 à 22, dans lequel la réduction du catalyseur est effectuée par passage du mélange réactionnel en continu sur le catalyseur à une température comprise entre 500° et 900 °C pendant une période de temps comprise entre 0,1 et 10 h.